# EUROPÄISCHE PATENTSCHRIFT

(11) **EP 2 553 224 B1**
(45) Veröffentlichungstag und Bekanntmachung des Hinweises auf die Patenterteilung: **30.09.2015**
(21) Anmeldenummer: 11708291.7
(22) Anmeldetag: 16.03.2011
(51) Int. Cl.: F01M 13/02, F16L 37/084, F02M 35/104, F02M 35/10, F16N 21/00, F16L 37/098, F02M 25/06

(54) **KUPPLUNGSEINRICHTUNG, KURBELGEHÄUSEENTLÜFTUNGSEINRICHTUNG UND FRISCHLUFTANLAGE**
COUPLING DEVICE, CRANKCASE VENTILATION DEVICE AND FRESH-AIR SYSTEM
DISPOSITIF DE RACCORDEMENT, DISPOSITIF DE DÉGAZAGE DE CARTER DE VILEBREQUIN ET INSTALLATION D'AIR FRAIS

(30) Priorität: 30.03.2010 DE 102010013422
(43) Veröffentlichungstag der Anmeldung: 06.02.2013
(73) Patentinhaber: Mahle International GmbH, 70376 Stuttgart (DE)
(72) Erfinder: KAISER, Sven Alexander, 71336 Waiblingen (DE); POTSCHER, Sjard, 70499 Stuttgart (DE); PRÖTTEL, Thomas, 73728 Esslingen (DE)
(74) Vertreter: BRP Renaud & Partner mbB Rechtsanwälte Patentanwälte Steuerberater
(86) Internationale Anmeldenummer: PCT/EP2011/053932
(87) Internationale Veröffentlichungsnummer: WO 2011/120797

(56) Entgegenhaltungen:
- EP-A1- 1 378 701
- EP-A2- 1 674 679
- WO-A1-2009/055949
- WO-A1-2009/076687
- WO-A1-2009/124805
- DE-A1- 3 232 221
- DE-C1- 3 625 376
- GB-A- 2 141 509
- GB-A- 2 251 046
- US-A- 4 854 338
- US-A- 5 102 313

## Beschreibung

Die vorliegende Erfindung betrifft eine Kupplungseinrichtung zum Verbinden einer ersten Fluidleitung mit einer zweiten Fluidleitung, mit den Merkmalen des Oberbegriffs des Anspruchs 1. Die Erfindung betrifft außerdem eine mit einer derartigen Kupplungseinrichtung ausgestattete Kurbelgehäuseentlüftungseinrichtung für eine Brennkraftmaschine sowie eine mit einer derartigen Kupplungseinrichtung ausgestattete Frischluftanlage für eine Brennkraftmaschine.

Bei einer Frischluftanlage einer Brennkraftmaschine und bei einer Kurbelgehäuseentlüftungseinrichtung einer Brennkraftmaschine müssen im Rahmen der Montage Fluidleitungen miteinander oder mit Komponenten der jeweiligen Einrichtung oder Anlage verbunden werden. Beispielsweise kann eine Blow-by-Gas-Leitung der Kurbelgehäuseentlüftungseinrichtung mit einem Kurbelgehäuse der Brennkraftmaschine oder mit einer Luftleitung der Frischluftanlage oder mit einem Ölabscheider der Kurbelgehäuseentlüftungseinrichtung fluidisch verbunden werden. Ferner kann eine Luftleitung der Frischluftanlage mit einem Filter der Frischluftanlage oder mit einer Ladeeinrichtung der Frischluftanlage oder mit einem Verteiler der Frischluftanlage fluidisch verbunden werden. Um derartige fluidische Verbindungen möglichst einfach, insbesondere blind, herzustellen, können Kupplungseinrichtung der eingangs genannten Art verwendet werden.

Eine derartige Kupplungseinrichtung ist beispielsweise aus der WO 2009/124805 A1 bekannt. Sie umfasst einen ersten Stutzen, der an seiner Außenseite eine Außenrastkontur aufweist und der mit einer ersten Fluidleitung verbunden ist oder damit verbindbar ist. Ferner ist ein zweiter Stutzen vorgesehen, der an seiner Außenseite eine Außenrastkontur aufweist und der mit einer zweiten Fluidleitung verbunden ist oder damit verbindbar ist. Schließlich umfasst die Kupplungseinrichtung außerdem eine Hülse, in welche beide Stutzen an gegenüberliegenden Enden einsteckbar sind und die an ihrer Innenseite zwei zu den Außenrastkonturen der Stutzen komplementäre Innenrastkonturen aufweist. Beim Einstecken der Stutzen in die Hülse verrasten die Innenrastkonturen mit den Außenrastkonturen, wodurch der jeweilige Stutzen in der Hülse gegen axiales Herausziehen gesichert ist.

Bei der bekannten Kupplungseinrichtung wird die jeweilige Innenrastkontur mit Hilfe eines ringförmigen Sicherungselements realisiert, das in eine an der Innenseite der Hülse ausgebildete Innennut eingesetzt ist und radial federnde Rastelemente aufweist.

Weitere Kupplungseinrichtungen sind aus der EP 1 912 009 A1, aus der EP 0 924 453 A1 und aus der EP 1 835 220 A1 bekannt.

Die US 4854338 offenbart eine Kupplungseinrichtung gemäß dem Oberbegriff vom Anspruch 1.

Die vorliegende Erfindung beschäftigt sich mit dem Problem, für eine Kupplungseinrichtung der eingangs genannten Art bzw. für eine damit ausgestattete Kurbelgehäuseentlüftungseinrichtung bzw. für eine damit ausgestattete Frischluftanlage eine verbesserte Ausführungsform anzugeben, die sich insbesondere durch geringe Herstellungskosten auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Innenrastkonturen an der Hülse integral auszuformen. Hierdurch kann auf ein separates Sicherungselement zur Realisierung der Innenrastkonturen verzichtet werden. Somit entfällt die Herstellung zusätzlicher Bauteile sowie die Montage dieser zusätzlichen Bauteile. Insgesamt kann somit die Kupplungseinrichtung vergleichweise preiswert realisiert werden.

Zweckmäßig sind auch die Außenrastkonturen an den Stutzen integral ausgeformt. Für die sichere Verrastung der Kupplungseinrichtung sind somit insgesamt nur drei Bauteile erforderlich, nämlich die beiden Stutzen und die Hülse. Es ist klar, dass zusätzlich auch wenigstens ein Dichtungselement vorhanden sein kann, um mit Hilfe der Kupplungseinrichtung die beiden Fluidleitungen dicht miteinander zu verbinden.

Gemäß einer besonders vorteilhaften Ausführungsform kann die jeweilige Innenrastkontur durch zumindest zwei in Umfangsrichtung verteilt angeordnete Rastkontursegmente gebildet sein. Mit anderen Worten, die jeweilige Innenrastkontur ist in Umfangsrichtung nicht vollständig umlaufend realisiert, sondern segmentweise. Hierdurch vereinfacht sich die Verrastung beim Steckvorgang.

Besonders vorteilhaft ist eine weitergehende Ausführungsform, bei welcher die Rastkontursegmente der einen Innenrastkontur gegenüber den Rastkontursegmenten der anderen Innenrastkontur in Umfangsrichtung versetzt angeordnet sind. Hierdurch können sich insbesondere fertigungstechnische Vorteile ergeben. Beispielsweise kann ein Spritzformwerkzeug zum Herstellen der Hülsen so einfacher realisiert werden, da weniger Hinterschnittkonturen vorhanden sind.

Gemäß einer anderen weiterführenden Ausgestaltung kann die jeweilige Innenrastkontur genau zwei Rastkontursegmente aufweisen, die gegenüber den beiden Rastkontursegmenten der jeweils anderen Innenrastkontur in Umfangsrichtung um 90° zueinander versetzt angeordnet sind. Auch hierdurch ergibt sich eine Vereinfachung für die Realisierung eines geeigneten Spritzformwerkzeugs.

Erfindungsgemäß ist die Verrastung zwischen den Stutzen und der Hülse so gestaltet, dass sie nicht ohne Zerstörung der Hülse und/oder wenigstens eines Stutzens lösbar ist. Insoweit handelt es sich hier um eine Kupplungseinrichtung zum Herstellen einer unlösbaren Verbindung. Durch diese Bauweise kann zum einen die Gefahr von Manipulationen reduziert werden. Zum anderen kann auch die Gefahr, dass sich die Verrastung selbsttätig löst, reduziert werden.

Um die Verrastung insoweit unlösbar auszugestalten, kann beispielsweise vorgesehen sein, die miteinander zusammenwirkenden Rastkonturen in Axialrichtung der Hülse vergleichsweise weit im Inneren anzuordnen um eine Zugänglichkeit von außen mittels eines Werkzeugs zu erschweren. Ferner lassen sich auch die Materialien von Hülsen und Stutzen so aufeinander abstimmen, dass eine elastische Verformung, die zu einem Lösen der Verrastung führt, nicht möglich ist.

Entsprechend einer weiteren Ausführungsform kann zumindest einer der Stutzen an seiner Außenseite einen ringförmig umlaufenden, abstehenden Bund aufweisen, der als Axialanschlag oder als Radialabstützung für die Hülse dient. Durch diesen Bund wird zum einen eine Positionierung und Stabilisierung der Hülse relativ zum jeweiligen Stutzen realisiert. Zum anderen erschwert dieser Bund die Zugänglichkeit zu den Rastkonturen.

Erfindungsgemäß weist die Hülse zumindest eine Sollbruchstelle auf, die zum Lösen der Verbindung eine gezielte Zerstörung der Hülse ermöglicht. Mit Hilfe dieser Sollbruchstelle wird eine Möglichkeit geschaffen, die verrastete Verbindung so zu lösen, dass dabei nur die Hülse zerstört wird, so dass insbesondere eine Beschädigung der Stutzen vermieden werden kann. Da die Stutzen in der Regel fest an einem anderen Bauteil, nämlich an der jeweiligen Fluidleitung, angebracht sind bzw. angeordnet sind, lässt sich die Hülse sehr viel einfacher ersetzen als ein Stutzen.

Zur Realisierung der Sollbruchstelle ist erfindungsgemäß an der Außenseite der Hülse zumindest eine Axialnut ausgebildet. An dieser Axialnut kann beispielsweise ein geeignetes Werkzeug, insbesondere ein Schlitzschraubendreher, angesetzt werden, um die Hülse dort zu zerstören.

Gemäß einer anderen vorteilhaften Ausführungsform kann zumindest einer der Stutzen zumindest eine Ausnehmung, insbesondere einen Axialschlitz mit im wesentlichen parallelen Seitenaufweisen. Andere Ausnehmungen können z.B. V-förmig ausgestaltet sein. Eine derartige Ausnehmung führt zu einer Materialschwächung bezüglich radialer Kräfte. In der Folge kann der jeweilige Stutzen im Bereich der Ausnehmung einfacher radial elastisch verformt werden, wodurch insbesondere der Steckvorgang bzw. die Verrastung zwischen den Rastkonturen vereinfacht ist. Zweckmäßig ist dabei der jeweilige Axialschlitz bzw. die Ausnehmung so positioniert, dass er/sie an der axialen Stirnseite des jeweiligen Stutzens beginnt und sich dann in der Axialrichtung erstreckt. Außerdem ist zwischen Wandabschnitten, die den jeweiligen Axialabschnitt der Umfangsrichtung begrenzen, eine Lücke vorhanden, wodurch die radiale elastische Nachgiebigkeit der mit der Hilfe der Ausnehmungen bzw. Axialschlitze voneinander separierten Umfangssegmente des Stutzens verbessert ist. Vorzugsweise sind je Stutzen zumindest zwei, bevorzugt vier, derartige Ausnehmungen bzw. Axialschlitze vorgesehen, die bevorzugt in Umfangsrichtung gleichmäßig verteilt angeordnet sind.

Entsprechend einer speziellen Ausführungsform kann jeder Stutzen an seiner Außenseite eine Radialdichtung aufweisen, die im eingesteckten Zustand an der Innenseite der Hülse dichtend anliegt. In diesem Fall ist jeder Stutzen separat gegenüber der Hülse abgedichtet. Bei einer derartigen Ausführungsform können die beiden Stutzen im eingesteckten Zustand innerhalb der Hülse stirnseitig aneinanderstoßen. Hierdurch baut die Kupplungseinrichtung besonders kompakt und formstabil. Außerdem besitzt diese Ausführungsform einen sehr geringen Durchströmungswiderstand, da die beiden Stutzen mit gleichen Innenquerschnitten versehen werden können, wodurch eine Durchströmung und Kupplungseinrichtung ohne Querschnittssprünge möglich ist.

Alternativ ist auch eine Ausführungsform möglich, bei welcher im eingesteckten Zustand der Stutzen der eine Stutzen innerhalb der Hülse in den anderen Stutzen eingesteckt ist. Hierdurch vereinfacht sich die Abdichtung der miteinander zu verbindenden Fluidleitungen, da nur noch die beiden Stutzen relativ zueinander abgedichtet werden müssen. Eine Abdichtung zwischen Stutzen und Hülse ist dann nicht mehr erforderlich. Beispielsweise kann der in den anderen Stutzen eingesteckte Stutzen an seiner Außenseite eine Radialdichtung aufweisen, die im eingesteckten Zustand an der Innenseite des anderen Stutzens dichtend anliegt.

Die jeweilige Außenrastkontur kann am jeweiligen Stutzen in Umfangsrichtung vollständig umlaufen. Hierdurch vereinfacht sich eine sichere Verrastung mit der Hülse. Sofern geschlitzte Stutzen vorgesehen sind, können die Axialschlitze zweckmäßig in Axialrichtung so groß dimensioniert sein, dass sie die jeweilige Außenrastkontur in der Umfangsrichtung unterbrechen. Hierdurch wird erreicht, dass die mit Hilfe der Axialschlitze gebildeten Umfangssegmente des jeweiligen Stutzens die Außenrastkontur bzw. die Außenrastkontursegmente tragen, so dass die Außenrastkontursegmente beim Steckvorgang federelastisch nach innen ausweichen können.

Gemäß einer vorteilhaften Ausgestaltung der Erfindung verfügen die Außenrastkonturen über einen, sich entgegen der Montagerichtung kontinuierlich vergrößernden Querschnitt. Diese kontinuierliche Vergrößerung kann linear, also mit einer gleichbleibenden Steigung oder mit unterschiedlichen Steigungen realisiert werden. Vorzugsweise schließt die Vergrößerung einen spitzen Winkel, insbesondere einen Winkel kleiner 75°, vorzugsweise von 30° - 45° ein. Bei unterschiedlichen Steigungen ist es vorteilhaft, mit einer geringen Steigung zu beginnen und diese dann zu vergrößern. Somit ist eine gute Montierbarkeit sichergestellt. An die kontinuierliche Querschnittsvergrößerung schließt eine sprunghafte Querschnittsverkleinerung an, welche eine radial, also im 90°-Winkel zu der Montagerichtung verlaufende Wand bildet. Bei anderen Ausführungen kann diese Wand auch einen größeren, insbesondere bis 100° oder kleineren Winkel, insbesondere größer 45°, einschließen. Diese Querschnittsverkleinerung kann bei einer vorteilhaften Ausführung dem Außenumfang des Stutzens entsprechen. Bei anderen Ausführungen kann diese Querschnittsverkleinerung jedoch auch größer oder kleiner als der Außenumfang ausgeführt sein. Hierbei ist dann ein Absatz oder eine Nut vorgesehen. Die mit dieser Außenrastkontur der/des Stutzens korrespondierende Innenrastkontur der Hülse kann z.B. als integrale Ringwand mit parallelen Seiten oder als eine Innennut ausgeführt werden.

Bei einer weiteren vorteilhaften Ausgestaltung der Erfindung sind die Innenrastkonturen der Hülse mit einem, sich in Montagerichtung verkleindernden Querschnitt ausgeführt. Dieser sich verjüngende Querschnitt kann linear, mit gleichbleibender Steigung oder mit unterschiedlichen Steigungen realisiert werden. Im Anschluss an die Steigung schließt ein Querschnittssprung an, der als radial verlaufende Wand ausgeführt ist. Diese Innenrastkontur kann analog zu den obigen Ausführungen zu der Außenrastkontur ausgeführt sein und mit einer Außenrastkontur, welche z.B. als umlaufender Absatz oder als ein, in einer Nut angeordneter Sicherungsring ausgeführt ist, korrespondieren.

Gemäß einer besonders vorteilhaften Ausführung korrespondieren die sich vergrößernden Querschnitte der Außenrastkonturen der Stutzen mit den sich verjüngenden Innenrastkonturen der Hülse. Mit anderen Worten, die konischen Rastkonturen besitzen betragsmäßig die gleichen Konizitäten, also Konuswinkel. Somit gleiten bei der Montage die Schrägen beider Rastkonturen flächig aufeinander. Nach dem Überschreiten der Querschnittssprünge liegen diese dann mit ihren radial verlaufenden Bereichen axial aneinander an und bilden so eine nicht lösbare Verrastung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene, isometrische Ansicht einer Kupplungseinrichtung,
- Fig. 2: eine isometrische Ansicht von zwei Stutzen der Kupplungseinrichtung,
- Fig. 3: eine isometrische Ansicht einer Hülse der Kupplungseinrichtung,
- Fig. 4: eine Seitenansicht der beiden Stutzen, jedoch bei einer anderen Ausführungsform der Kupplungseinrichtung,
- Fig. 5: eine teilweise geschnittene Seitenansicht der Kupplungseinrichtung bei einer weiteren Ausführungsform,
- Fig. 6: eine teilweise geschnittene Seitenansicht der Kupplungseinrichtung bei einer anderen Ausführungsform
- Fig. 7: einen Längsschnitt der Kupplungseinrichtung im Bereich von Rastkonturen.

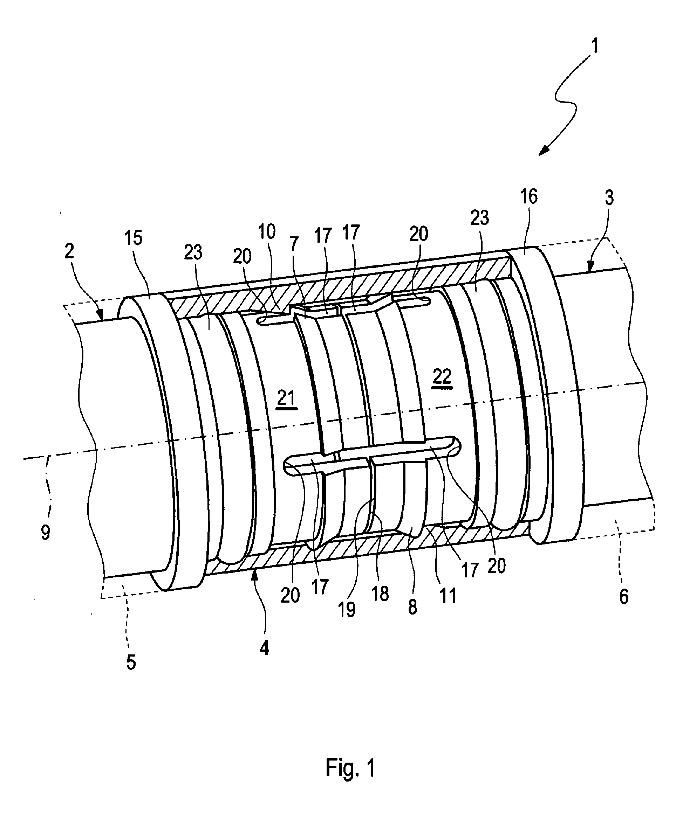

Entsprechend den Fig. 1 bis 6 umfasst eine Kupplungseinrichtung 1 einen ersten Stutzen 2, einen zweiten Stutzen 3 und eine Hülse 4. Die Kupplungseinrichtung 1 dient zum Verbinden einer mit unterbrochener Linie angedeuteten ersten Fluidleitung 5 mit einer ebenfalls mit unterbrochener Linie angedeuteten zweiten Fluidleitung 6. Die Fluidleitungen 5, 6 können dabei Bestandteile einer im Übrigen nicht dargestellten Kurbelgehäuseentlüftungseinrichtung einer Brennkraftmaschine bzw. einer Frischluftanlage einer Brennkraftmaschine sein. Beispielsweise kann eine der beiden Fluidleitungen 5, 6 eine Blow-by-Gas-Leitung der Kurbelgehäuseentlüftungseinrichtung sein, die ein Kurbelgehäuse der Brennkraftmaschine mit einer Frischluftanlage der Brennkraftmaschine verbindet. Die andere Fluidleitung 5, 6 kann dann am Kurbelgehäuse oder an der Frischluftanlage oder an einem Ölabscheider der Kurbelgehäuseentlüftungseinrichtung ausgebildet sein. Bei einer Frischluftanlage kann die eine Fluidleitung durch eine Luftleitung gebildet sein, während die andere Fluidleitung 5, 6 beispielsweise an einem Filter der Frischluftanlage oder an einer Ladeeinrichtung, insbesondere Verdichter, der Frischluftanlage oder an einem Verteiler der Frischluftanlage ausgebildet sein kann.

Der erste Stutzen 2 weist an seiner Außenseite eine Außenrastkontur 7 auf und ist mit der ersten Fluidleitung 5 verbunden oder so ausgestaltet, dass er mit der ersten Fluidleitung 5 verbindbar ist. Sofern die erste Fluidleitung 5 ein Gehäuse ist, kann der erste Stutzen 2 integral an diesem Gehäuse ausgeformt sein. Sofern die erste Fluidleitung 5 ein Schlauch ist, kann dieser auf den ersten Stutzen 2 aufgeschossen werden.

Der zweite Stutzen 3 weist an seiner Außenseite ebenfalls eine Außenrastkontur 8 auf und ist mit der zweiten Fluidleitung 6 verbunden oder so ausgestaltet, dass er mit der zweiten Fluidleitung 6 verbindbar ist. Sofern es sich bei der zweiten Fluidleitung 6 um ein Gehäuse oder dergleichen handelt, kann der zweite Stutzen 3 integral an diesem Gehäuse ausgeformt sein. Handelt es sich bei der zweiten Fluidleitung 6 jedoch um einen Schlauch, kann dieser auf den zweiten Stutzen 3 aufgeschossen sein. Bei den Ausführungsformen der Fig. 1 bis 5 sind die beiden Stutzen 2, 3 identisch ausgestaltet, so dass es sich dabei um Gleichteile handelt. Die Außenrastkonturen 7, 8 weisen entgegen der Montagerichtung eine kontinuierliche Querschnittsvergrößerung, also einen Konus, auf. Diese ist im Profil, erfindungsgemäß, als Rampe ausgeführt. In Montagerichtung verfügen die Außenrastkonturen 7, 8 über einen Querschnittssprung, der als Stufe ausgeführt ist.

Die Hülse 4 ist so dimensioniert, dass die beiden Stutzen 2, 3 darin bezüglich einer Längsmittelachse 9 der zylindrischen Hülse 4 axial einsteckbar sind, und zwar an gegenüberliegenden Enden der Hülse 4. Die Längsmittelachse 9 der Hülse 4 definiert gleichzeitig die Steckrichtung und die Längsachse der Kupplungseinrichtung 1. Die Hülse 4 weist an ihrer Innenseite zwei Rastkonturen 10 und 11 auf, die komplementär zu den Außenrastkonturen 7, 8 der Stutzen 2, 3 ausgestaltet sind. Die Rastkonturen 7, 8, 10, 11 sind so aufeinander abgestimmt, dass sie beim Einstecken des Stutzen 2, 3 in die Hülse 4 miteinander verrasten und die so hergestellte Verbindung zwischen den Fluidleitungen 5, 6 sichern. Die Hülse 4 bzw. die jeweilige Innenrastkontur 10, 11 verfügt ebenfalls über eine kontinuierliche Querschnittsveränderung, also einen Konus, entgegen der Montagerichtung und über einen daran anschließenden Querschnittssprung zurück in den Ausgangsdurchmesser, der im Profil nach Art einer Rampe gestaltet ist. Bei der Montage gleiten die Schrägen oder Rampen der Rastkonturen 7, 8, 10, 11, insbesondere bei gleichen Konizitäten flächig, aufeinander, bis sie den Querschnittssprung überschritten haben. Dann liegen die im Wesentlichen radial verlaufenden Wände, die sich am Ende der jeweiligen Stufe befinden, axial aneinander an und bilden so eine, vorzugsweise unlösbare, Rastverbindung.

Die Innenrastkonturen 10, 11 sind integral an der Hülse 4 ausgeformt. Zweckmäßig können auch die Außenrastkonturen 7, 8 am jeweiligen Stutzen 2, 3 integral ausgeformt sein.

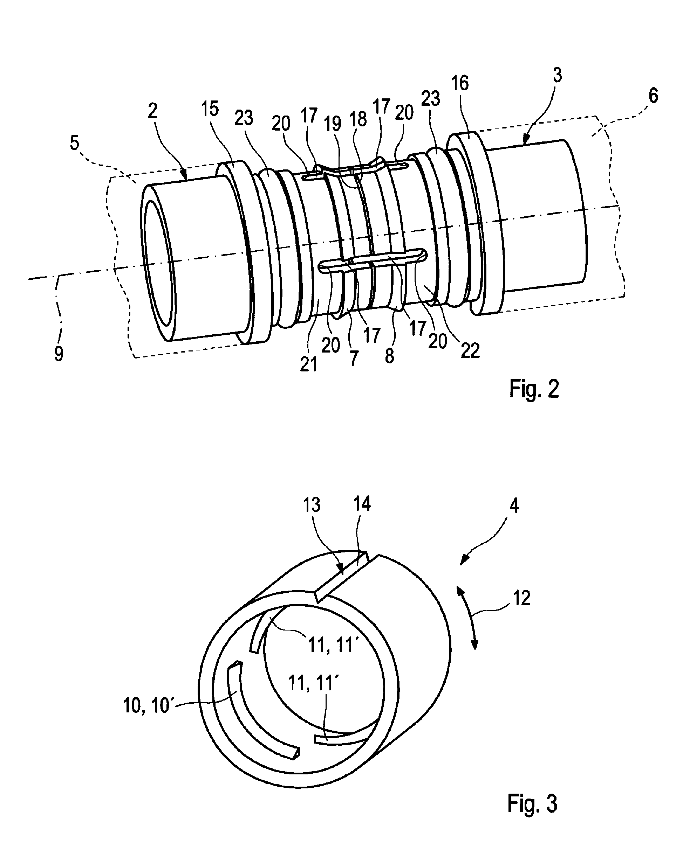

Wie sich beispielsweise Fig. 3 entnehmen lässt, können die Innenrastkonturen 10, 11 so ausgestaltet sein, dass sie in einer in Fig. 3 durch einen Doppelpfeil angedeuteten Umfangsrichtung 12 der Hülse 4 nicht vollständig umlaufen, sondern durch wenigstens zwei in der Umfangsrichtung 12 verteilt angeordnete Rastkontursegmente 10' bzw. 11' gebildet sind. Im hier gezeigten Beispiel weist die jeweilige Innenrastkontur 10, 11 jeweils genau zwei solche Rastkontursegmente 10' bzw. 11' auf. Dabei sind innerhalb der jeweiligen Innenrastkontur 10, 11 die zugehörigen Rastkontursegmente 10', 11' zueinander diametral gegenüberliegend positioniert. Ferner sind die Rastkontursegmente 10' der einen Innenrastkontur 10 gegenüber den Rastkontursegmenten 11' der anderen Innenrastkontur 11 in der Umfangsrichtung 12 versetzt angeordnet. Dieser Versatz in Umfangsrichtung liegt bei der in Fig. 3 gezeigten Ausführungsform bei etwa 90°. Bevorzugt wird die Kupplungseinrichtung 1 so konzipiert, dass die damit hergestellte Verbindung insbesondere die zwischen den Stutzen 2, 3 und der Hülse 4 hergestellte Verrastung, unlösbar ausgestaltet ist, also nur durch Zerstörung der Hülse 4 und/oder wenigstens eines Stutzens 2, 3 gelöst werden kann. Insbesondere sind somit keine Lösemittel vorgesehen. Ferner ist auch nicht vorgesehen, dass die Hülse 4 und/oder die Stutzen 2, 3 soweit elastisch verformbar sind, dass durch elastische Deformation die Verrastung gelöst werden könnte.

Falls dennoch die mit Hilfe der Kupplungseinrichtung 1 hergestellte Verbindung getrennt werden muss, ist erfindungsgemäß die Hülse 4 gemäß den Fig. 3, 5 und 6 mit wenigstens einer Sollbruchstelle 13 ausgestattet. Diese Sollbruchstelle 13 ist dabei so konzipiert, dass sie zum Lösen der Verbindung bzw. der Verrastung eine gezielte Zerstörung der Hülse 4 ermöglicht. Durch gezielte Zerstörung der Hülse 4 kann insbesondere eine Beschädigung der Stutzen 2, 3 und gegebenenfalls der damit verbundenen Fluidleitungen 5, 6 vermieden werden. Durch Ersetzen der zerstörten Hülse 4 kann die Kupplungseinrichtung 1 gegebenenfalls wieder erneuert werden, so dass sie erneut eine Verbindung zwischen den Fluidleitungen 5, 6 bzw. eine Verrastung der beiden Stutzen 2, 3 durch Einstecken in die neue Hülse 4 ermöglicht.

Erfindungsgemäß ist diese Sollbruchstelle 13 durch eine Axialnut 14 realisiert, die an der Außenseite der Hülse 4 ausgebildet ist. Zweckmäßig erstreckt sich die Axialnut 14 über die gesamte axiale Länge der Hülse 4. Im Beispiel der

Fig. 3 ist die Axialnut 14 im Profil keilförmig oder V-förmig gestaltet, was eine besonders einfache Trennung ermöglicht.

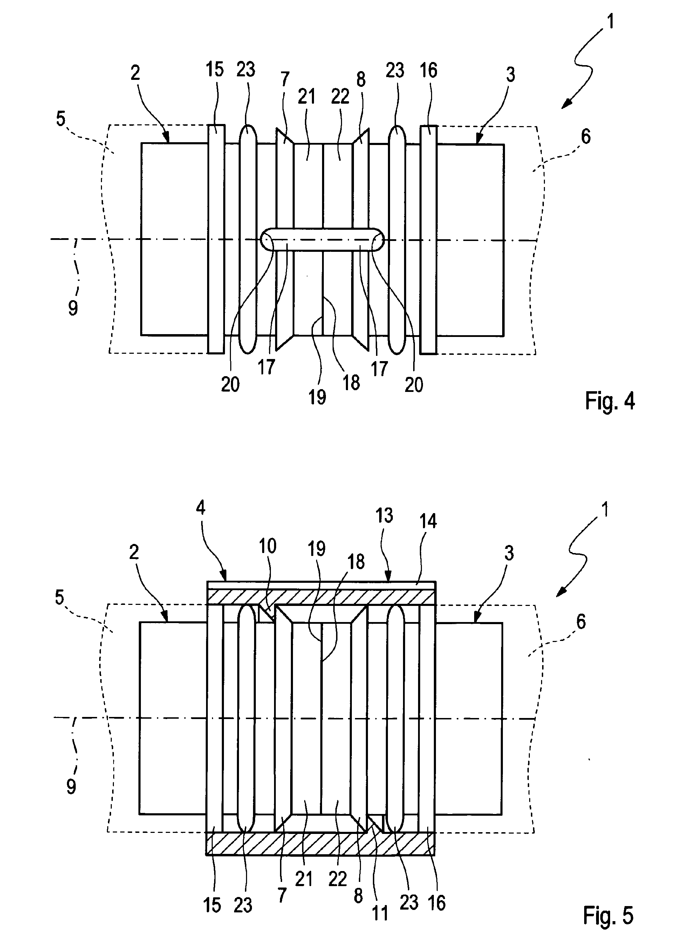

Bei den in den Fig. 1 und 2 sowie 4 und 5 gezeigten Ausführungsformen sind die beiden Stutzen 2, 3 an ihrer Außenseite jeweils mit einem Bund 15, 16 ausgestattet, der nach außen absteht und in der Umfangsrichtung 12 ringförmig umlaufend ausgestaltet ist. In der Ausführung der Fig. 1 und 2 sind die beiden Bünde 15, 16 auf die Hülse 4 so abgestimmt, dass sie im verrasteten Zustand einen Axialanschlag für die Hülse 4 bilden. Im Unterschied dazu sind die beiden Bünde 15, 16 bei den Ausführungsformen der Fig. 4 und 5 so auf die Hülse 4 abgestimmt, dass sie im verrasteten Zustand eine Radialabstützung für die Hülse 4 bilden.

Bei den Ausführungsformen der Fig. 1, 2 und 4 sind die beiden Stutzen 2, 3 axial geschlitzt, so dass jeder Stutzen 2, 3 zumindest einen Axialschlitz 17 aufweist. Bevorzugt sind mehrere Axialschlitze 17 je Stutzen 2, 3 vorgesehen. Der jeweilige Axialschlitz 17 beginnt zweckmäßig jeweils an einem stirnseitigen Ende 18 bzw. 19 des jeweiligen Stutzens 2, 3. Er erstreckt sich axial, also parallel zur Längsmittelachse 9 der Hülse 4. Er endet bevorzugt in einem abgerundeten Schlitzgrund 20, um Spannungsspitzen zu reduzieren.

Anstelle von Axialschlitzen 17 sind grundsätzlich auch beliebige andere Ausnehmungen realisierbar, um die radiale Federelastizität der Umfangsabschnitte des jeweiligen Stutzens 2, 3 zu verbessern. Derartige Ausnehmungen können parallele Seiten aufweisen oder V-förmig gestaltet sein.

Sofern mehrere Axialschlitze 17 je Stutzen 2, 3 vorhanden sind, sind diese zweckmäßig in Umfangsrichtung 12 gleichmäßig verteilt. Beispielsweise können vier Axialschlitze 17 je Stutzen 2, 3 vorgesehen sein, die jeweils um etwa 90° zueinander versetzt angeordnet sind. Die Axialschlitze 17 unterteilen den jeweiligen Stutzen 2 in einem die jeweilige Außenrastkontur 7 bzw. 8 aufweisenden Endabschnitt in mehrere Stutzensegmente 21, 22, die in radialer Richtung eine gewisse Federelastizität besitzen. Hierdurch kann der Rastvorgang erheblich vereinfacht werden. Zweckmäßig erstrecken sich die Axialschlitze 17 dann durch die jeweilige Außenrastkontur 7, 8, wodurch diese in der Umfangsrichtung 12, durch den jeweiligen Schlitz 17 unterbrochen ist.

Bei den Ausführungsformen der Fig. 1 bis 5 weist jeder Stutzen 2, 3 an seiner Außenseite jeweils zumindest eine Radialdichtung 23 auf, die in eingestecktem bzw. verrastetem Zustand an der Innenseite der Hülse 4 dichtend zur Anlage kommen. Zur Erzielung einer möglichst kompakten Bauform sowie zur Vermeidung von Relativbewegungen zwischen den Stutzen 2, 3 und der Hülse 4 im verrasteten Zustand können die Stutzen 2, 3 und die Hülse bzw. die Rastkontur 7, 8, 10, 11 so aufeinander abgestimmt sein, dass die beiden Stutzen 2, 3 stirnseitig aneinanderstoßen, wenn sie mit der Hülse 4 verrastet sind.

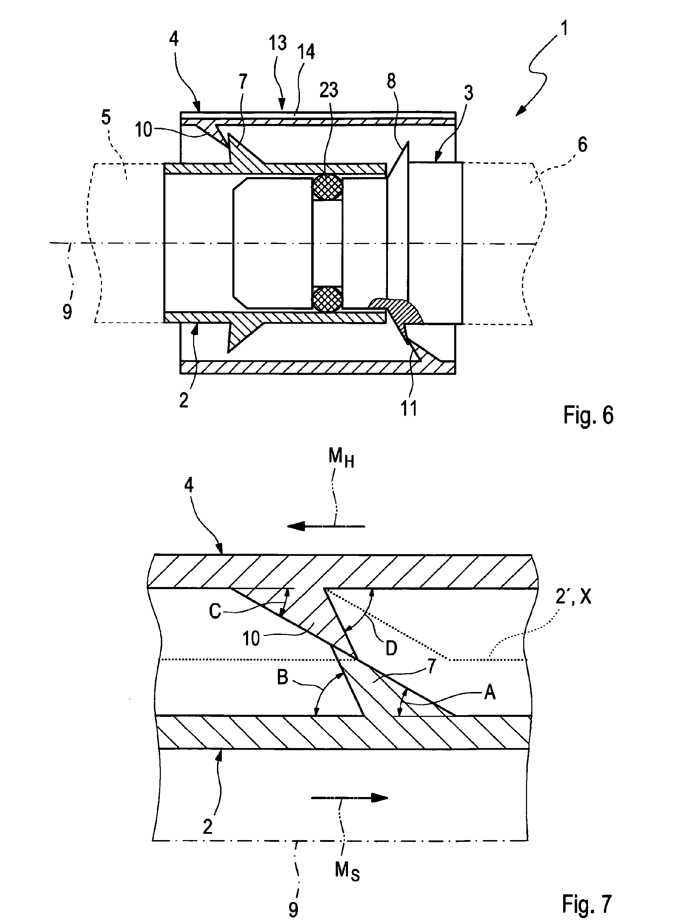

Fig. 6 zeigt nun eine andere Ausführungsform, bei der im verrasteten Zustand der eine Stutzen, hier der zweite Stutzen 3 innerhalb der Hülse 4 in den anderen Stutzen, also hier in den ersten Stutzen 2 eingesteckt ist. Bemerkenswert ist, dass auch bei dieser Ausführungsform beide Stutzen 2, 3 jeweils mit der Hülse 4 direkt verrastet sind. Diese Ausführungsform zeichnet sich dadurch aus, dass nur noch eine Radialdichtung 23 erforderlich ist, um die gewünschte Abdichtung innerhalb der Kupplungseinrichtung 1 realisieren zu können. Hierzu ist an der Außenseite des in den anderen Stutzen 2 eingesteckten Stutzens 3 besagte Radialdichtung 23 angeordnet, die im eingesteckten Zustand dann an einer Innenseite des anderen Stutzens 2 dichtend anliegt. Eine zusätzliche Dichtung zwischen den Stutzen 2, 3 und der Hülse 4 ist hier nicht erforderlich.

In Figur 7 ist ein Ausschnitt der Rastkonturen 7, 8, 10, 11 dargestellt. Der erste Stutzen 2 wird in Montagerichtung M_{S} (strich-zwei-punktierter Pfeil) in die Hülse 4 eingeschoben. Zusätzlich kann die Hülse 4 ebenfalls in Montagerichtung M_{H} (strich-zwei-punktierter Pfeil) auf den Stutzen 2 aufgeschoben werden. Die Außenrastkontur 7 des ersten Stutzens 2 verfügt über eine Querschnittsvergrößerung, die entgegen der Montagerichtung Ms mit einem spitzen Winkel A linear ansteigt. Der Winkel A liegt zwischen 20° und 75°, vorzugsweise etwa 30° bis 45°. Im Anschluss an die Querschnittsvergrößerung verjüngt sich der Querschnitt sprungartig, wobei zwischen dem Stutzenaußendurchmesser und der Querschnittsvergrößerung ein Winkel B gebildet ist. Dieser Winkel B liegt zwischen 45° und 100°, vorzugsweise zwischen 75° bis 90°. Die Innenrastkontur 10 der Hülse 4 verfügt ebenfalls über eine linear verlaufende Querschnittsveränderung. Diese sind durch die Winkel C und D definiert. Der Winkel C ist analog Winkel A und der Winkel D ist analog Winkel B ausgestaltet. Die Winkel A und C sind vorzugsweise gleich groß, während die Winkel B und D verschieden sein können oder ebenfalls gleich sind. Die punktierte Linie X zeigt den ersten Stutzen 2' in montierter Lage, also nach der Verrastung.

## Patentansprüche

1. Kupplungseinrichtung zum Verbinden einer ersten Fluidleitung (5) mit einer zweiten Fluidleitung (6),
- mit einem ersten Stutzen (2), der an seiner Außenseite eine Außenrastkontur (7) aufweist und der mit der ersten Fluidleitung (5) verbunden ist oder damit verbindbar ist,
- mit einem zweiten Stutzen (3), der an seiner Außenseite eine Außenrastkontur (8) aufweist und der mit der zweiten Fluidleitung (6) verbunden ist oder damit verbindbar ist,
- mit einer Hülse (4), in welche beide Stutzen (2, 3) an gegenüberliegenden Enden einsteckbar sind und die an ihrer Innenseite zu den Außenrastkonturen (7, 8) komplementäre Innenrastkonturen (10, 11) aufweist, die beim Einstecken der Stutzen (2, 3) mit den Außenrastkonturen (7, 8) verrasten,
- wobei die Innenrastkonturen (10, 11) integral an der Hülse (4) ausgeformt sind,
- wobei die Hülse (4) zumindest eine Sollbruchstelle (13) aufweist, die zum Lösen der Verrastung zwischen den Stutzen (2, 3) und der Hülse (4) eine gezielte Zerstörung der Hülse (4) ermöglicht,
**dadurch gekennzeichnet,**
- **dass** die Verrastung zwischen den Stutzen (2, 3) und der Hülse (4) so gestaltet ist, dass sie nicht ohne Zerstörung der Hülse (4) und/oder wenigstens eines Stutzens (2, 3) lösbar ist,
- **dass** die Sollbruchstelle (13) zumindest eine an der Außenseite der Hülse (4) ausgebildete Axialnut (14) aufweist oder durch diese gebildet ist,
- **dass** die Rastkonturen (7, 8, 10, 11) im Profil rampenförmig ausgestaltet sind.

2. Kupplungseinrichtung nach Anspruch 1,
**dadurch gekennzeichnet,**
**dass** die Außenrastkonturen (7, 8) integral an den Stutzen (2, 3) ausgeformt sind.

3. Kupplungseinrichtung nach Anspruch 1 oder 2,
**dadurch gekennzeichnet,**
- **dass** die Innenrastkonturen (10,11) jeweils durch mindestens zwei in Umfangsrichtung (12) verteilt angeordnete Rastkontursegmente (10', 11'), gebildet sind,
- wobei insbesondere vorgesehen sein kann, dass die Rastkontursegmente (10', 11') der einen Innenrastkontur (10, 11) gegenüber den Rastkontursegmenten (10', 11') der anderen Innenrastkontur (10, 11) in Umfangsrichtung (12) versetzt angeordnet sind,
- wobei insbesondere vorgesehen sein kann, dass die jeweilige Innenrastkontur (10,11) genau zwei Rastkontursegmente (10', 11') aufweist, die gegenüber den beiden Rastkontursegmenten (10', 11') der jeweils anderen Innenrastkontur (10, 11) in Umfangsrichtung (12) um 90° versetzt angeordnet sind.

4. Kupplungseinrichtung nach einem der Ansprüche 1 bis 3,
**dadurch gekennzeichnet,**
**dass** zumindest einer der Stutzen (2, 3) an seiner Außenseite einen ringförmig umlaufenden, abstehenden Bund (15, 16) aufweist, der als Axialanschlag oder als Radialabstützung für die Hülse (4) dient.

5. Kupplungseinrichtung nach einem der Ansprüche 1 bis 4,
**dadurch gekennzeichnet,**
**dass** zumindest einer der Stutzen (2, 3) zumindest eine Ausnehmung, z.B. einen Axialschlitz (17), aufweist, wobei vorzugsweise mehrere Ausnehmungen oder Axialschlitze (17) in Umfangsrichtung (12) verteilt angeordnet sein können.

6. Kupplungseinrichtung nach Anspruch 5,
**dadurch gekennzeichnet,**
**dass** am jeweiligen Stutzen (2, 3) die Außenrastkontur (7, 8) in der Umfangsrichtung (12) umläuft und durch die jeweilige Ausnehmung oder durch den jeweiligen Axialschlitz (17) unterbrochen ist.

7. Kupplungseinrichtung nach einem der Ansprüche 1 bis 6,
**dadurch gekennzeichnet,**
**dass** jeder Stutzen (2, 3) an seiner Außenseite eine Radialdichtung (23) aufweist, die im eingesteckten Zustand an der Innenseite der Hülse (4) dichtend anliegt.

8. Kupplungseinrichtung nach einem der Ansprüche 1 bis 7,
**dadurch gekennzeichnet,**
**dass** die beiden Stutzen (2, 3) im eingesteckten Zustand innerhalb der Hülse (4) stimseitig aneinanderstoßen.

9. Kupplungseinrichtung nach einem der Ansprüche 1 bis 8,
**dadurch gekennzeichnet,**
**dass** im eingesteckten Zustand der Stutzen (2, 3) der eine Stutzen (3) innerhalb der Hülse (4) in den anderen Stutzen (2) eingesteckt ist.

10. Kupplungseinrichtung nach Anspruche 9,
**dadurch gekennzeichnet,**
**dass** der in den anderen Stutzen (2) eingesteckte Stutzen (3) an seiner Außenseite eine Radialdichtung (23) aufweist, die im eingesteckten Zustand an der Innenseite des anderen Stutzens (2) dichtend anliegt.

11. Kupplungseinrichtung nach einem der Ansprüche 1 bis 10,
**dadurch gekennzeichnet,**
**dass** bei den rampenförmigen Rastkonturen (7, 8, 10, 11) gleiche Rampensteigungen vorgesehen sind, so dass die Rampen beim Steckvorgang flächig aneinander abgleiten.

12. Kurbelgehäuseentlüftungseinrichtung für eine Brennkraftmaschine, insbesondere eines Kraftfahrzeugs,
- mit einer Blow-by-Gas-Leitung, die ein Kurbelgehäuse der Brennkraftmaschine mit einer Frischluftanlage der Brennkraftmaschine verbindet,
- mit mindestens einer Kupplungseinrichtung (1) nach einem der Ansprüche 1 bis 11 zum Verbinden der Blow-by-Gas-Leitung mit dem Kurbelgehäuse oder mit der Frischluftanlage oder mit einem gegebenenfalls in die Blow-by-Gas-Leitung eingebundenen Ölabscheider.

13. Frischluftanlage für eine Brennkraftmaschine, insbesondere eines Kraftfahrzeugs,
- mit einer Luftleitung,
- mit mindestens einer Kupplungseinrichtung (1) nach einem der Ansprüche 1 bis 11 zum Verbinden der Luftleitung mit einem Filter der Frischluftanlage oder mit einer Ladeeinrichtung der Frischluftanlage oder mit einem Verteiler der Frischluftanlage.

## Claims

1. Coupling device for connecting a first fluid line (5) to a second fluid line (6),
- comprising a first connecting piece (2) which has an outer latching contour (7) on the outside thereof and is either connected or connectable to the first fluid line (5),
- comprising a second connecting piece (3) which has an outer latching contour (8) on the outside thereof and is either connected or connectable to the second fluid line (6),
- comprising a sleeve (4), into which both connecting pieces (2, 3) can be inserted at opposite ends, and which has inner latching contours (10, 11) on the inside thereof which complement the outer latching contours (7, 8) and latch with the outer latching contours (7, 8) when the connecting pieces (2, 3) are inserted,
- the inner latching contours (10, 11) being integrally formed on the sleeve (4),
- the sleeve (4) having at least one predetermined breaking point (13) which makes it possible to destroy the sleeve (4) in a targeted manner in order to release the latching connection between the two connecting pieces (2, 3) and the sleeve (4),
**characterised in that**
- the latching connection between the connecting pieces (2, 3) and the sleeve (4) is designed such that it cannot be released without destroying the sleeve (4) and/or at least one connecting piece (2, 3),
- **in that** the predetermined breaking point (13) has at least one axial groove (14) formed on the outside of the sleeve (4), or is formed by said groove,
- and **in that** the latching contours (7, 8, 10, 11) are designed to have a ramp-shaped profile.

2. Coupling device according to claim 1, **characterised in that** the outer latching contours (7, 8) are integrally formed on the connecting pieces (2, 3).

3. Coupling device according to either claim 1 or claim 2, **characterised in that**
- each of the inner latching contours (10, 11) are formed by at least two latching contour segments (10', 11') arranged so as to be distributed in the circumferential direction (12),
- it being possible in particular to provide that the latching contour segments (10', 11') of one inner latching contour (10, 11) are arranged so as to be offset in the circumferential direction (12) from the latching contour segments (10', 11') of the other inner latching contour (10, 11),
- it being possible in particular to provide that each inner latching contour (10, 11) has exactly two latching contour segments (10', 11') which are arranged so as to be offset by 90° in the circumferential direction (12) from the two latching contour segments (10', 11') of the other inner latching contour (10, 11).

4. Coupling device according to any of claims 1 to 3, **characterised in that** at least one of the connecting pieces (2, 3) has a collar (15, 16) on the outside thereof which projects therefrom and extends therearound in the form of a ring, and serves as an axial stop or as a radial support for the sleeve (4).

5. Coupling device according to any of claims 1 to 4, **characterised in that** at least one of the connecting pieces (2, 3) has at least one recess, for example an axial slit (17), it being possible for a plurality of recesses or axial slits (17) to preferably be arranged so as to be distributed in the circumferential direction (12).

6. Coupling device according to claim 5, **characterised in that** the outer latching contour (7, 8) extends around the respective connecting piece (2, 3) in the circumferential direction (12) and is interrupted by the respective recess or by the respective axial slit (17).

7. Coupling device according to any of claims 1 to 6, **characterised in that** each connecting piece (2, 3) has a radial seal (23) on the outside thereof which abuts the inner side of the sleeve (4) so as to form a seal when said connecting piece is inserted.

8. Coupling device according to any of claims 1 to 7, **characterised in that** the end faces of the two connecting pieces (2, 3) abut each other inside the sleeve (4) when said connecting pieces are inserted.

9. Coupling device according to any of claims 1 to 8, **characterised in that**, when the connecting pieces (2, 3) are inserted, one connecting piece (3) is inserted into the other connecting piece (2) inside the sleeve (4).

10. Coupling device according to claim 9, **characterised in that** the connecting piece (3) inserted into the other connecting piece (2) has a radial seal (23) on the outside thereof, which, when said connecting piece is inserted, abuts the inside of the other connecting piece (2) so as to form a seal.

11. Coupling device according to any of claims 1 to 10, **characterised in that** the same ramp gradients are provided for the ramp-shaped latching contours (7, 8, 10, 11) so that the ramps slide against one another in a planar manner during the insertion process.

12. Crankcase ventilation device for an internal combustion engine, in particular of a motor vehicle,
- comprising a blow-by-gas line which connects a crankcase of the internal combustion engine to a fresh-air system of the internal combustion engine,
- comprising at least one coupling device (1) according to any of claims 1 to 11 for connecting the blow-by-gas line to the crankcase or to the fresh-air system or to an oil separator which may be integrated in the blow-by-gas line.

13. Fresh-air system for an internal combustion engine, in particular of a motor vehicle,
- comprising an air line,
- comprising at least one coupling device (1) according to any of claims 1 to 11 for connecting the air line to a filter of the fresh-air system or to a charging device of the fresh-air system or to a distributor of the fresh-air system.

## Revendications

1. Dispositif de raccordement destiné au raccordement d'une première conduite de fluide (5) à une seconde conduite de fluide (6),
- avec une première tubulure (2), qui présente un contour d'encliquetage extérieur (7) au niveau de son côté extérieur et qui est raccordée à la première conduite de fluide (5), ou qui peut être raccordée à celle-ci,
- avec une seconde tubulure (3), qui présente un contour d'encliquetage extérieur (8) au niveau de son côté extérieur et qui est raccordée à la seconde conduite de fluide (6), ou qui peut être raccordée à celle-ci,
- avec un manchon (4), dans lequel les deux tubulures (2, 3) peuvent être insérées aux extrémités opposées et qui présente au niveau de son côté intérieur des contours d'encliquetage intérieurs (10, 11), complémentaires aux contours d'encliquetage extérieurs (7, 8), et qui viennent s'encliqueter avec les contours d'encliquetage extérieurs (7, 8) lors de l'insertion des tubulures (2, 3),
- dans lequel les contours d'encliquetage intérieurs (10, 11) sont façonnés d'une seule pièce au niveau du manchon (4),
- dans lequel le manchon (4) présente tout au moins un point de rupture nominal (13), qui permet une destruction ciblée du manchon (4) en vue de séparer l'encliquetage entre les tubulures (2, 3) et le manchon (4),
**caractérisé en ce que**
- l'encliquetage entre les tubulures (2, 3) et le manchon (4) est conçu de telle sorte qu'il ne peut être désolidarisé sans la destruction du manchon (4) et/ou au moins d'une tubulure (2, 3),
- le point de rupture nominal (13) présente tout au moins une rainure axiale (14) formée au niveau du côté extérieur du manchon (4) ou qui est formée par celle-ci,
- les contours d'encliquetage (7, 8, 10, 11) sont conçus en forme de rampe dans le profilé.

2. Dispositif de raccordement selon la revendication 1,
**caractérisé en ce que**
les contours d'encliquetage extérieurs (7, 8) sont façonnés d'une seule pièce au niveau des tubulures (2, 3).

3. Dispositif de raccordement selon la revendication 1 ou 2,
**caractérisé en ce que**
- les contours d'encliquetage intérieurs (10, 11) sont formés respectivement par au moins deux segments de contour d'encliquetage (10', 11') disposés de manière répartie dans le sens de la circonférence (12),
- dans lequel il peut être prévu en particulier que les segments de contour d'encliquetage (10', 11') de l'un des contours d'encliquetage intérieurs (10, 11) soient disposés de manière décalée dans le sens de la circonférence (12) par rapport aux segments de contour d'encliquetage (10', 11') de l'autre contour d'encliquetage intérieur (10,11),
- dans lequel il peut être prévu en particulier que le contour d'encliquetage intérieur (10, 11) respectif présente exactement deux segments de contour d'encliquetage (10', 11'), qui sont disposés de manière décalée de 90° dans le sens de la circonférence (12) par rapport aux deux segments de contour d'encliquetage (10', 11') de l'autre contour d'encliquetage intérieur (10,11) respectif.

4. Dispositif de raccordement selon l'une des revendications 1 à 3,
**caractérisé en ce que**
tout au moins l'une des tubulures (2, 3) présente au niveau de son côté extérieur un raccord (15, 16) qui s'étend autour de celle-ci de façon annulaire et fait saillie, et sert de butée axiale ou d'appui radial pour le manchon (4).

5. Dispositif de raccordement selon l'une des revendications 1 à 4,
**caractérisé en ce que**
tout au moins l'une des tubulures (2, 3) présente tout au moins une cavité, par exemple une fente axiale (17), dans laquelle de préférence plusieurs cavités ou fentes axiales (17) peuvent être disposées de manière répartie dans le sens de la circonférence (12).

6. Dispositif de raccordement selon la revendication 5,
**caractérisé en ce que**
le contour d'encliquetage extérieur (7, 8) s'étend dans le sens de la circonférence (12) au niveau de la tubulure (2, 3) respective, et est interrompu par la cavité respective ou par la fente axiale (17) respective.

7. Dispositif de raccordement selon l'une des revendications 1 à 6,
**caractérisé en ce que**
chaque tubulure (2, 3) présente au niveau de son côté extérieur un joint d'étanchéité radiale (23) qui, à l'état inséré, vient s'appliquer de façon étanche au niveau du côté intérieur du manchon (4).

8. Dispositif de raccordement selon l'une des revendications 1 à 7,
**caractérisé en ce que**
les deux tubulures (2, 3), à l'état inséré, butent frontalement l'une contre l'autre à l'intérieur du manchon (4).

9. Dispositif de raccordement selon l'une des revendications 1 à 8,
**caractérisé en ce que**
à l'état inséré des tubulures (2, 3), l'une des tubulures (3) est insérée dans l'autre tubulure (2) à l'intérieur du manchon (4).

10. Dispositif de raccordement selon la revendication 9,
**caractérisé en ce que**
la tubulure (3) insérée dans l'autre tubulure (2) présente au niveau de son côté extérieur un joint d'étanchéité radiale (23) qui, à l'état inséré, vient s'appliquer de façon étanche au niveau du côté intérieur de l'autre tubulure (2).

11. Dispositif de raccordement selon l'une des revendications 1 à 10,
**caractérisé en ce que**
les mêmes inclinaisons de rampe sont prévues pour les contours d'encliquetage (7, 8, 10, 11) en forme de rampe, de sorte que les rampes viennent glisser l'une sur l'autre de manière plane, lors du processus d'insertion.

12. Dispositif de ventilation d'un carter de vilebrequin pour un moteur à combustion interne, en particulier d'un véhicule à moteur,
- avec une conduite de gaz de fuite qui raccorde un carter de vilebrequin du moteur à combustion interne à une installation d'air frais du moteur à combustion interne,
- avec au moins un dispositif de raccordement (1) selon l'une des revendications 1 à 11, destiné au raccordement de la conduite du gaz de fuite au carter de vilebrequin ou à l'installation d'air frais ou à un séparateur d'huile éventuellement intégré dans la conduite du gaz de fuite.

13. Installation d'air frais pour un moteur à combustion interne, en particulier d'un véhicule à moteur,
- avec une conduite d'air,
- avec au moins un dispositif de raccordement (1) selon l'une des revendications 1 à 11, destiné au raccordement de la conduite d'air à un filtre de l'installation d'air frais ou à un dispositif de charge de l'installation d'air frais ou à un répartiteur de l'installation d'air frais.
